# EUROPEAN PATENT SPECIFICATION

(11) **EP 4 355 560 B1**
(45) Date of publication and mention of the grant of the patent: **08.10.2025**
(21) Application number: 21755417.9
(22) Date of filing: 02.08.2021
(51) Int. Cl.: B29D 11/00, G02B 13/00, G02B 3/14

(54) **OPTICALLY TUNEABLE LENS ASSEMBLIES**
OPTISCH ABSTIMMBARE LINSENBAUGRUPPEN
ENSEMBLES DE LENTILLES OPTIQUEMENT REGLABLES

(43) Date of publication of application: 24.04.2024
(73) Proprietor: Huawei Technologies Co., Ltd., Shenzhen, Guangdong 518129 (CN)
(72) Inventor: EROMAKI, Marko, 16440 Kista (SE)
(74) Representative: Maiwald GmbH
(86) International application number: PCT/EP2021/071569
(87) International publication number: WO 2023/011698

(56) References cited:
- CN-A- 110 286 428
- JP-A- 2009 278 040
- US-A- 5 574 598
- US-A1- 2010 053 911
- US-A1- 2013 057 963

## Description

### TECHNICAL FIELD

The present disclosure relates, in general, to lens architectures. Aspects of the disclosure relate to methods of manufacture of lens architectures for optically tuneable lens assemblies.

### BACKGROUND

In optical imaging systems one or more characteristics of an optical lens can be tuned in order to enable focus to be achieved. For example, a focal length of a lens can be tuned so that the lens forms a clear image of an object to be imaged. A lens aperture can also be modified so that bright or dim lighting conditions do not cause too much or too little light to be transmitted by the lens.

Conventional lens tuning is typically implemented by structures that are configured to physically move lenses and open and close apertures for example, in order to achieve focus. In general, these structures and the corresponding optical elements can often be difficult or expensive to fabricate for very small form factor lenses, such as those provided in smart phones for example, and can often not meet the physical space requirements for use in compact spaces whilst also providing desired imaging capabilities.

Tuneable optical lenses, or liquid lenses, are shape-changing lenses based on optical fluids and optical membranes, the combination of which act as lenses that can be tuned. Deflection of the membrane, such as by exerting a pressure on the membrane enables the shape of the membrane to be varied. Such lens structures enable very high refraction changes within a compact size. For example, a change in lens radius of several micrometers can have the same optical effect as physically moving the entirety of a conventional lens system by several centimeters. Accordingly, tuneable optical lenses enable compact optical systems with low response times.

Tuneable lens architectures provide manufacturing and assembly challenges in terms of, e.g., the mutual integration of structural body shapes, optical liquids and membranes which can limit and be limited by the technical form factors and manufacturing capacity or yield, and thus affect the suitability of a tuneable lens unit for use in mobile handset environments.

A method of manufacturing an optically tuneable lens assembly is disclosed in CN 110 286 428 A.

### SUMMARY

An objective of the present disclosure is to provide an improvement in the manufacturing and assembly processes associated with camera architectures, particularly small form factor camera architectures that are suitable for use with mobile devices such as smart phones and the like.

The foregoing and other objectives are achieved by the features of the independent claims. Further implementation forms are apparent from the dependent claims, the description and the Figures.

A first aspect of the present disclosure provides a method of manufacturing an optically tuneable lens assembly, the method comprising extruding a support structure comprising a monolithic body section defined by a first wall and a second wall separated from the first wall by multiple supporting ribs, the body section comprising a pair of opposing outer side wall sections disposed between the first wall and the second wall at respective outer edges thereof, forming a first opening in the body section, the first opening extending through the body section, forming a second opening in the body section, the second opening extending through the first wall or the second wall and respective portions of a first set of supporting ribs disposed between the first wall and a second wall at a position of the second opening, disposing a flexible optical membrane over, on or within the first opening at the first wall, disposing an optical cover plate over, on or within the first opening at the second wall, disposing a flexible actuator membrane over, on or within the second opening, and sealing the body section at a first edge and a second edge thereof, the first edge and the second edge extending laterally across the body section between the first and second walls and the opposing outer wall sections.

Extruding part of a camera architecture overcomes current manufacturing (mass-production and assembly) limitations for high accuracy and thin-walled metallic container units to be used as base sections in liquid lens assemblies. Aside from benefits associated with productivity (e.g., more cost efficient and faster), it also leads to other architectural benefits for shaping options since a number of non-existing base section designs can be realized and versatile tuneable liquid lenses can be generated on top of these. These enable more practical camera integration solutions for electromechanical architectures in, e.g., smartphone environments.

In an implementation of the first aspect, an optical fluid can be deposited in a cavity defined by body section. The optical fluid can be transparent. The optical fluid can be used to deform an optical membrane. Such deformation can be enable light passing through the optical membrane to be, e.g., focussed. In an example, a portion of the first opening at the first and/or second walls can be enlarged or bored to reveal respective portions of a second set of supporting ribs disposed between the first wall and a second wall at a position of the first opening. The exposed portions of the ribs can be used as support surfaces for a membrane or cover plate. That is, for example, the flexible optical membrane and/or the optical cover plate can be supported or otherwise provided on the revealed portions of the second set of supporting ribs.

In an example, a portion of the second opening can be enlarged to reveal respective portions of the first set of supporting ribs disposed between the first wall and a second wall at the position of the second opening. The flexible actuator membrane can be supported on the revealed portions of the first set of supporting ribs. A support member can be provided on at least one of the flexible optical membrane, the optical cover plate and the flexible actuator membrane. The support member can be a rigid ring or annulus, or multiple rigid or semi rigid portions attached to or integrally formed with the flexible optical membrane, the optical cover plate or the flexible actuator membrane for example.

In an example, a third opening can be formed in the body section, the third opening extending through the first wall or the second wall and respective portions of a third set of supporting ribs disposed between the first wall and a second wall at a position of the third opening. A flexible actuator membrane can be disposed or otherwise provided over, on or within the third opening.

In an implementation of the first aspect, the body section can further comprise a third wall disposed adjacent to the first wall or the second wall and separated therefrom by a further set of multiple supporting ribs, and the method can further comprise extending the first opening in the body section through the third wall, forming a third opening in the body section, the third opening extending through the third wall and respective portions of the further set of multiple supporting ribs disposed between the third wall and the first or second wall at a position of the third opening, disposing a flexible optical membrane over, on or within the first opening at the third wall, disposing a flexible actuator membrane over, on or within the third opening, and sealing the body section at a first edge and a second edge thereof, the first edge and the second edge extending laterally across the body section between the first or second and third walls.

The extruding or extrusion can be impact extrusion. In an alternative example, casting can be used.

A second aspect of the present disclosure provides a tuneable optical lens structure, comprising an extruded support structure comprising a monolithic body section defined by a first wall and a second wall separated from the first wall by multiple supporting ribs, the body section comprising a pair of opposing outer side wall sections disposed between the first wall and the second wall at respective outer edges thereof, a first opening in the body section, the first opening extending through the body section, a second opening in the body section, the second opening extending through the first wall or the second wall and respective portions of a first set of supporting ribs disposed between the first wall and a second wall at a position of the second opening, a flexible optical membrane over, on or within the first opening at the first wall, an optical cover plate over, on or within the first opening at the second wall, a flexible actuator membrane over, on or within the second opening, and sealing members to seal the body section at a first edge and a second edge thereof, the first edge and the second edge extending laterally across the body section between the first and second walls and the opposing outer wall sections.

In an implementation of the second aspect, the monolithic body section can define a first profile in which the first opening and the second opening are arranged parallel to one another. The monolithic body section can comprises a first arm and a second arm, wherein the first opening is provided on the first arm and the second opening is provided on the second arm. The first arm can be perpendicular to the second arm. The first arm can be disposed at an angle to the second arm, the angle comprising one of an acute, obtuse and reflex angle. The first arm can be parallel to the second arm, and the tuneable optical lens structure can further comprise a body section portion joining the first arm and the second arm. The body section portion can define an angular profile such that the first arm and the second arm are provided in spaced relation to one another. The optical cover plate can be flexible. The optical cover plate can be transparent.

These and other aspects of the invention will be apparent from the embodiment(s) described below.

### BRIEF DESCRIPTION OF THE DRAWINGS

In order that the present invention may be more readily understood, embodiments of the invention will now be described, by way of example, with reference to the accompanying drawings, in which:
Figure 1 is a flowchart of a method of manufacturing an optically tuneable lens assembly according to an example;
Figure 2a is a schematic representation of an optically tuneable lens assembly according to an example;
Figure 2b is a schematic representation of an optically tuneable lens assembly according to an example;
Figure 3a is a schematic representation of an optically tuneable lens assembly according to an example;
Figure 3b is a schematic representation of an optically tuneable lens assembly according to an example;
Figure 4 is a schematic representation of a tuneable optical lens assembly according to an example;
Figures 5a, 5b and 5c are schematic representations of optically tuneable lens assemblies according to an example;
Figure 6 is a schematic representation of an optically tuneable lens assembly according to an example;
Figure 7 is a schematic representation of an optically tuneable lens assembly according to an example;
Figures 8a and 8b are schematic representations of optically tuneable lens assemblies according to an example;
Figure 9 is a schematic representation of an optically tuneable lens assembly according to an example;
Figure 10 is a schematic representation of an optically tuneable lens assembly according to an example;
Figure 11 is a schematic representation of an optically tuneable lens assembly according to an example;
Figure 12 is a schematic representation of an optically tuneable lens assembly according to an example;
Figure 13 is a schematic representation of an optically tuneable lens assembly according to an example;
Figure 14 is a schematic representation of an optically tuneable lens assembly according to an example; and
Figures 15a and 15b are schematic representations of optically tuneable lens assemblies according to examples.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Known manufacturing and assembly processes may limit the technical form factor and manufacturing capability of tuneable lenses. In camera architectures for use with, e.g., mobile handsets such as smart phones, this can limit their applicability, particular in thew case of multi-camera and optical zoom systems having upright or folded optical paths for example.

In order to overcome the limitations associated with existing fabrication process, whilst maintaining the benefits associated with the use of high accuracy and thin walled metallic container units forming support structures for optical elements such as membranes and defining reservoirs for optical fluids, a method of manufacturing an optically tuneable lens assembly is provided in which such support structures can be extruded or cast. This enables more cost effective and faster manufacturing, whilst also leading to architectural benefits in terms of the options for shaping leading to more versatile, suitable and practical camera integration solutions in, e.g., smart phone environments.

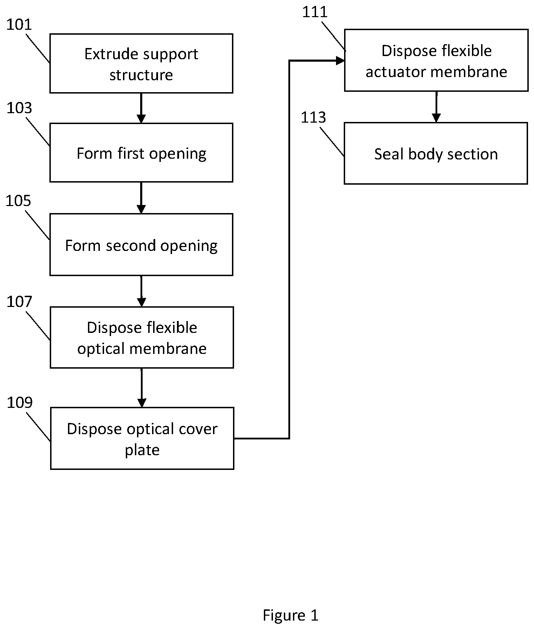

Figure 1 is a flowchart of a method of manufacturing an optically tuneable lens assembly according to an example. The optically tuneable lens assembly comprises a support structure comprising a monolithic body section defined by a first wall and a second wall separated from the first wall by multiple supporting ribs, and in which the body section comprises a pair of opposing outer side wall sections disposed between the first wall and the second wall at respective outer edges thereof. In block 101, such a support structure is extruded. For example, a material, such as a metallic material (e.g., aluminium) can be pushed through a die comprising one or more apertures having a cross-section or profile matching a desired cross-sectional profile for the support structure. Other materials, such as other metals, polymers or ceramics may also be used. The extrusion may be hot or cold extrusion, continuous or semi-continuous.

Given a length of extrudate, individual support structures can be cut. In block 103, a first opening is formed in the body section of a support structure. Alternatively, openings may be formed in a length of extrudate before separation into individual support structures. In an example, the first opening extends through the body section. For example, the first opening can extend through the first wall and second wall and any intermediate supporting ribs in the body section at the location of the first opening. The openings may have the same size and/or profile (e.g., circular), or may have different sizes and/or profiles.

In block 105, a second opening is formed in the body section. In an example, the second opening extends through the first wall or the second wall and respective portions of a first set of supporting ribs disposed between the first wall and a second wall at a position of the second opening. That is, whilst the first opening extends all the way through the body section to form a through hole, the second opening does not extend all the way through the body section.

In block 107, a flexible optical membrane is disposed over, on or within the first opening at the first wall. In block 109, an optical cover plate is disposed over, on or within the first opening at the second wall. In block 111, a flexible actuator membrane is disposed over, on or within the second opening. In block 113, the body section is sealed at a first edge and a second edge thereof, the first edge and the second edge extending laterally across the body section between the first and second walls and the opposing outer wall sections. The body section can be filled with a transparent fluid, e.g., before the last of one of the membranes is fixed in place, or before sealing of the body section. For example, the two open sides of the body section can be sealed using rubber gaskets that can be fixed or adhered in placed. Accordingly, a closed volume container holds transparent liquid inside. It separates two main areas on the lens body, an actuation section onto which external force can be applied, and an optical section which performs light refraction.

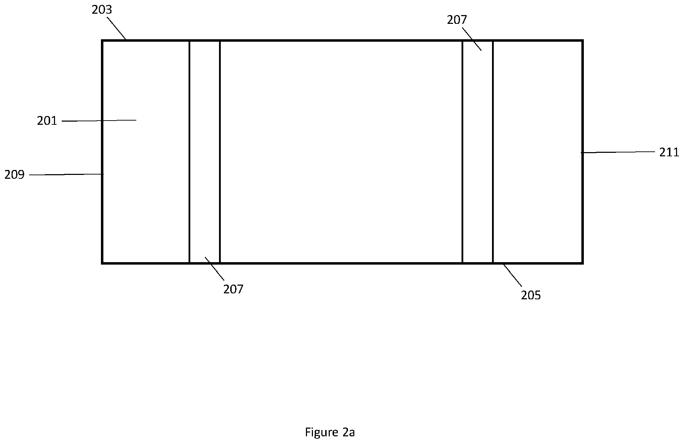

Figure 2a is a schematic representation of an optically tuneable lens assembly according to an example. The assembly defines a monolithic body section 201 defined by a first wall 203 and a second wall 205 separated from the first wall by multiple supporting ribs 207. The body section 201 comprises a pair of opposing outer side wall sections 209, 211 disposed between the first wall 203 and the second wall 205 at respective outer edges thereof.

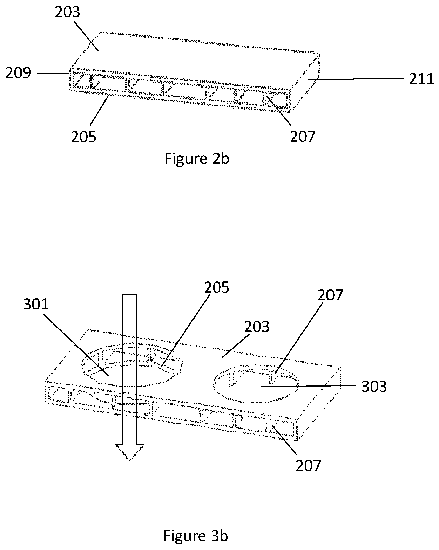

Figure 2b is a schematic representation of an optically tuneable lens assembly according to an example. The assembly of figure 2b is shown in perspective view, in which the monolithic body section 201 defined by a first wall 203 and a second wall 205 separated from the first wall by multiple supporting ribs 207 can be seen. As with figure 2a, the body section 201 comprises a pair of opposing outer side wall sections 209, 211 disposed between the first wall 203 and the second wall 205 at respective outer edges thereof. The ribs extend across the body section (in the direction of extrusion of the assembly).

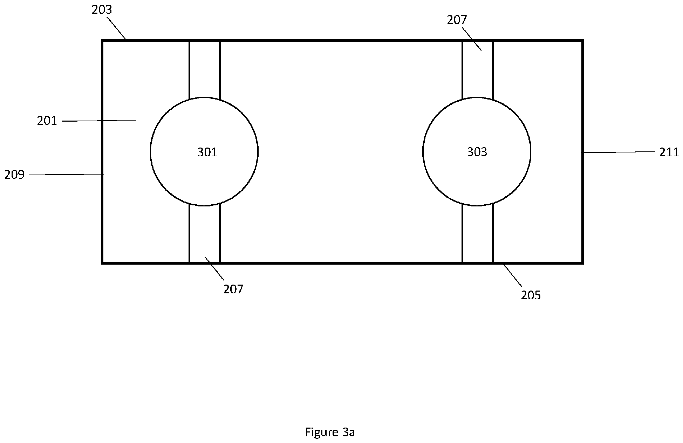

Figure 3a is a schematic representation of an optically tuneable lens assembly according to an example. The assembly of figure 2 is shown in plan view, and comprises a first opening 301 formed in the body section 201 of the support structure, and a second opening 303 formed in the body section 201 of the support structure. First opening 301 extends through the first wall 203 and second wall 205 and any intermediate supporting ribs 207 in the body section at the location of the first opening. Second opening 303 extends through the first wall 203 but not the second wall 205. Second opening 303 extends through portions of any intermediate supporting ribs 207 in the body section at the location of the second opening.

Figure 3b is a schematic representation of an optically tuneable lens assembly according to an example. The example of figure 3b shows an assembly in perspective view. First opening 301 and second opening 303 are visible. As can be seen from figure 3b, the first opening 301 is a through opening as indicated by the arrow, whereas the second opening is a blind or non-through opening that terminates at the second wall 205. Some portions of the ribs 207 are cut away in the process of making the openings 301, 303, as can be seen. However, the reminder of the ribs are maintained and provide stability to the overall assembly. It should be noted that, in an example, an assembly may be devoid of ribs. In this case, the walls 203, 205 and side walls 209, 211 form a box and the remaining two open sides can be sealed in the same manner as noted above.

Broadly speaking, and referring to figure 3b, the side of the assembly comprising the first opening 301 defines an optical section, and the other side of the assembly comprising the second opening 303 defines an actuation section.

The sections can be thought of as being linked by one or more flow channels through which a transparent fluid can freely flow. Thus, the actuation section comprises a (blind, non-through) opening 303 that, in an example, can be covered by a flexible, e.g., elastic, membrane. This membrane can be operated (pushed, pulled) by an actuator to effect changes in the volumetric pressure inside the body section. The optical section comprises a (through) opening 301 which can be closed on one side with a transparent rigid element such as, e.g., a glass cover, and a flexible, e.g., elastic, membrane on the opposite side. This membrane can change its shape from, e.g., concave to convex when the internal volumetric pressure changes and thus is thus able to perform lens related functions.

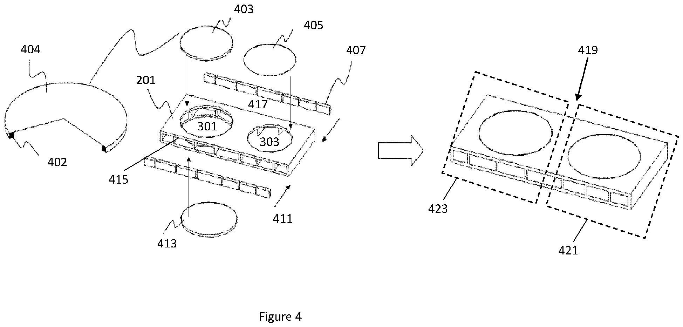

Figure 4 is a schematic representation of a tuneable optical lens assembly according to an example. A monolithic body section 201 is formed, as noted above, by extrusion and comprises a first wall and a second wall separated from the first wall by multiple supporting ribs. A flexible optical membrane 403 can be provided for the first opening 301 and mounted over, on or within the first opening. The optical membrane can comprise a support ring 402 carrying a thin membrane 404. In the example of figure 4, the support ribs at the location of the first opening 301 can be used to hold the ring 402. The ribs can hold the ring in place by way of friction fit, and/or may provide a series of ledges upon which the ring may rest. For example, when making the opening 301, a first through bore can be made followed by a second partial cut using a cutter of larger diameter, thereby removing a portion of the first wall 203 above the ribs whilst leaving some of the ribs intact so as to provide ledges. In an alternative example, the optical membrane 403 can be directly mounted on base section 201 over the first opening 301.

An optical cover plate 413 can be mounted over, on or within the bottom side of the opening 301, as depicted. Similarly to above, the bottom of the opening 301 can be over-bored in order to provide support regions in the form of ledges by way of portions of ribs protruding into the opening. Accordingly, plate 413 may be adhered to or otherwise mounted/supported/fixed to these support regions.

A flexible actuator membrane 405 can be mounted over, on or within the second opening 303. Membrane 405 may be optically transparent or opaque. Membrane 403 and plate 413 are optically transparent.

The open sides (415; 417) of the base section 201 can be closed by sealing with, e.g., glue or by using separate, e.g., rubber gaskets or caps 407. The body section 201 can be filled with liquid in between any of these steps, resulting in the optically tuneable lens assembly 419. Accordingly, an optically tuneable lens assembly comprising an actuation section 421 and an optical section 423 can be provided.

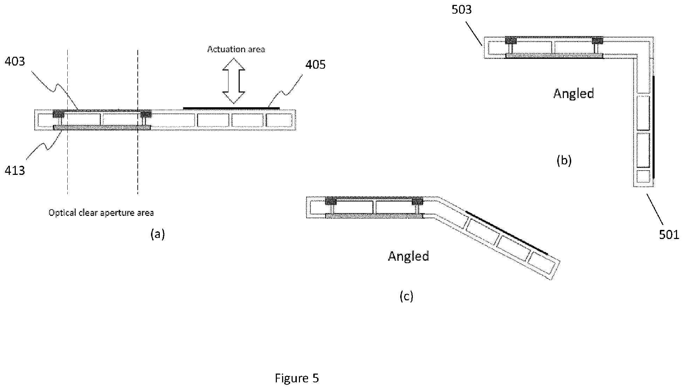

Figures 5a-c are schematic representations of optically tuneable lens assemblies according to an example. The examples in figures 5a, 5b and 5c represent single-sided, single angle assemblies. The assembly of figure 5a represents the simplest case, in which an extruded support structure is planar and can be segmented in order to provide body sections such as those described above with reference to figures 3 and 4 for example. In figure 5b, an extruded body section is formed with two arms at right angles to one another. One arm 501 defines an actuation section for the assembly, and the other arm 503 defines the optical section for the assembly. This is similarly the case for the example shown in figure 5c, save for the angle subtended by the arms of the assembly, which in the case of figure 5c is obtuse (or reflex depending on which side of the arms one chooses to use).

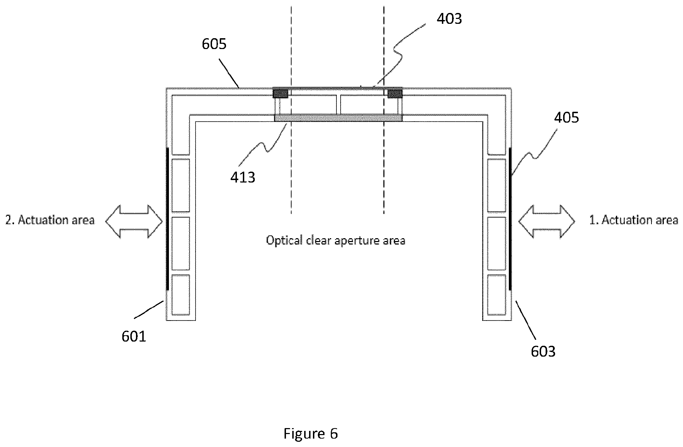

Figure 6 is a schematic representation of an optically tuneable lens assembly according to an example. In the example of figure 6, a dual sided assembly is provided. Assembly 600 comprises two arms 601, 603 depending from a central region 605 of the assembly. Arms 601, 603 define two separate actuation sections, and central region 605 defines an optical section. Such a dual-angled form factor, having two actuation sections, provides for a higher force generation to operate the single optical deformation section 605.

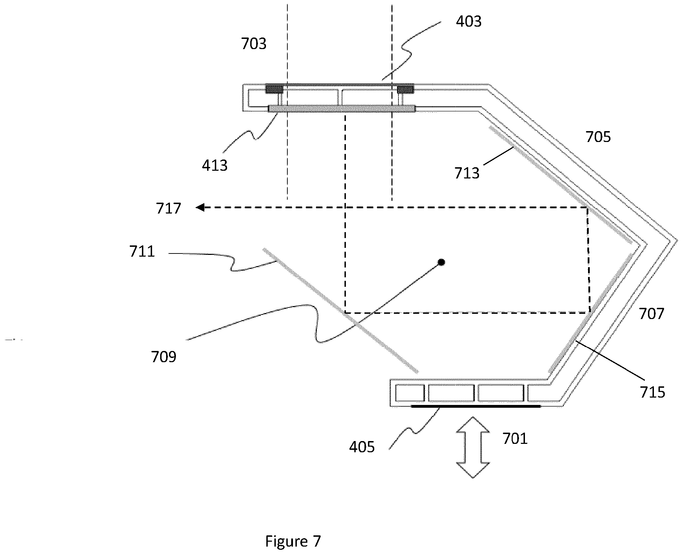

Figure 7 is a schematic representation of an optically tuneable lens assembly according to an example. In the example of figure 7, a multi-angled form factor for an assembly is provided in which optical and actuation sections are separated by multiple arms arranged in angular relation to one another. An actuation section 701 is separated from an optical section 703 by way of arms 705, 707, which are, in the same manner as the examples described above, so linked and fluidly coupled to the sections 701, 703 as to enable a fluid to pass therebetween. As described above, the actuation section can be used to force fluid between the actuation and optical sections whereby to regulate the shape or profile of the flexible optical membrane 403.

In the example of figure 7, an optically clear or transparent region 709 is provided in the space defined between the arms 715, 707 and the sections 703 and 701. A reflective surface 711, such as a mirror may be provided in fixed relation to the assembly such that, in combination with reflective surfaces 713, 715, which may be provided on the inside faces of the arms 705, 707 as shown, form an optical pathway that enables light to pass through the optical section 703 and travel away from the assembly at a selected angle, such as 90 degrees for example, thereby providing a folded optical assembly. The angle subtended by the arms 705, 707 can be any desired angle, thereby enabling the direction of an emitted optical signal 717 to be tuned. In an example, one or more of the reflective surfaces 711, 713, 715 may be moved, rotated, translated or scanned in order to alter the direction of the signal 717.

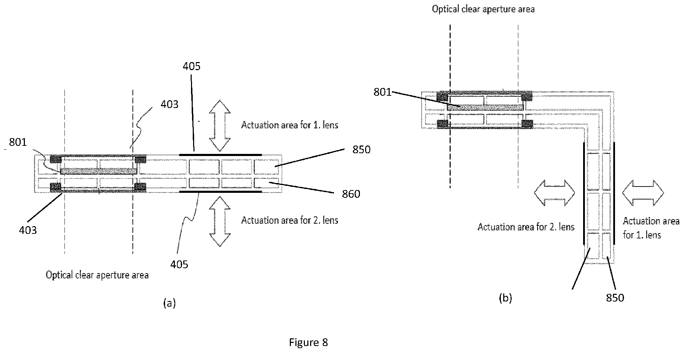

Figures 8a-b are schematic representations of optically tuneable lens assemblies according to an example. The example of figure 8a depicts a layered type assembly defining two integrated liquid lens containers 850, 860 in which liquids are separated by a membrane 801 such as, e.g., a cover glass. Each lens 403 can be operated individually via the membranes of the corresponding actuation section. The example of figure 8a depicts a base section that is straight. However, angled sections, such as that depicted in figure 8b for example can also be provided as will be apparent. In some examples, different liquids or liquid-gas combinations can be used in the liquid lens containers 850, 860.

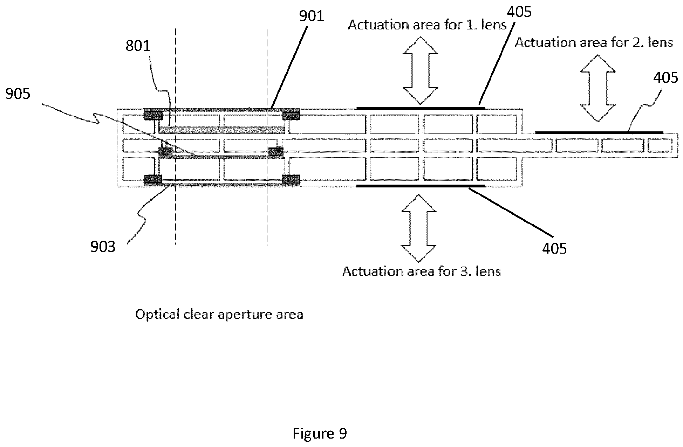

Figure 9 is a schematic representation of an optically tuneable lens assembly according to an example. The example of figure 9 depicts triple-layer lens structure for a base section in which two outer lenses have flexible optical membranes 901, 903 provided on the outermost areas of the base section, whilst a third lens, comprising a flexible optical membrane 905 is provided inside the base section. A cover membrane 801 can be provided to fluidly separate the liquid containers defined by the base section. This membrane may be between, e.g., membrane 901 and 905 as shown, or between membrane 905 and membrane 903. The base section in the example of figure 9 thus defines three cavity structures that can support the use of three different liquids or liquid-gas combinations. The corresponding actuation sections are separated and the middle such section (for lens 905) for example, can extend out from the stack so as to be physically accessible. Similarly to examples above, the assembly of figure 9 may comprise an angled section or sections, e.g., like the assembly shown in figure 7 or 8b.

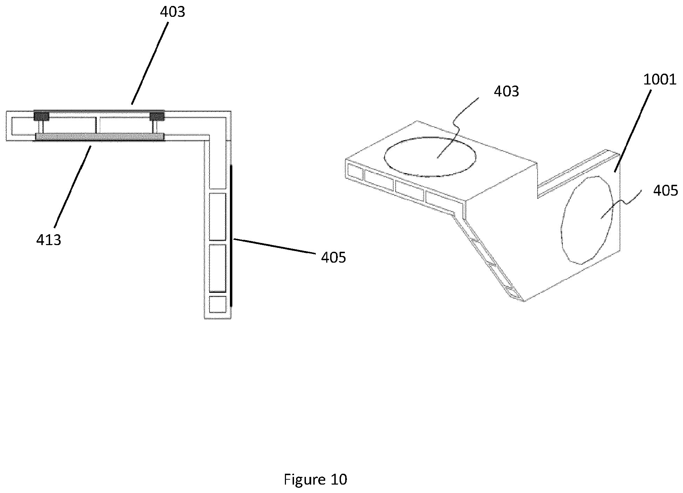

Figure 10 is a schematic representation of an optically tuneable lens assembly according to an example. In the example of figure 10 the base section of an assembly (shown in cross section and perspective views), is extended in the direction of extrusion for suitable post-forming (e.g., cutting, machining) operations. This extended section (1001) of the body section can comprise the actuation section for example, and therefore may enable a more convenient placement of electromechanical actuators on, e.g., a camera architecture.

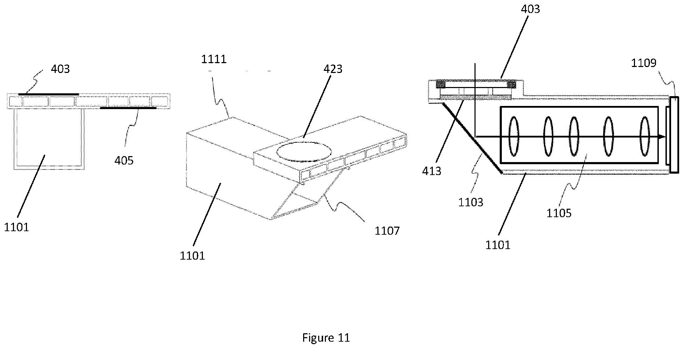

Figure 11 is a schematic representation of an optically tuneable lens assembly according to an example. In the example of figure 11 the base section of an assembly (shown in multiple cross sectional and perspective views), comprises a housing structure 1101 that extends beyond a core optical section 423. The housing structure 1101 defines an elongate cavity or channel with an angled support 1107 at one end to receive a reflective surface such as a mirror for example. In the example of figure 11, the angled support is provided at an end of the housing structure 1101 connected to the optical section 423. The opposite end of the housing structure 1101 comprises a support 1111 for an image sensor, which is shown in situ in the right hand perspective view of the assembly of figure 11 (1109). An optical block 1105, comprising, e.g., multiple conventional lens elements can be provided in the cavity defined by the housing structure 1101. Thus, key assembly members such as an image sensor board 1109 and a main optics block 1105 (e.g., formed by lens barrel with injection molded lenses), in addition to focusing/zooming actuators, prisms, mirrors, etc. can be directly supported against the extended base liquid lens housing having been conveniently shaped by post-machined/drilled features.

In the example of figure 11, light entering through the optical section via membrane 403 can be reflected from surface 1103 and pass through the optical block 1105 before being incident on a sensor 1109.

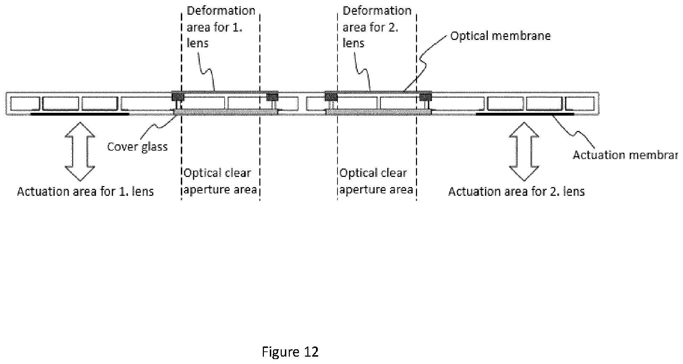

Figure 12 is a schematic representation of an optically tuneable lens assembly according to an example. In the example of figure 12, two separated liquid lens systems are arranged in parallel, side-by-side, on a shared extruded housing. Both optical membranes of the systems can be operated via separated actuation membranes (e.g., on either side of the body).

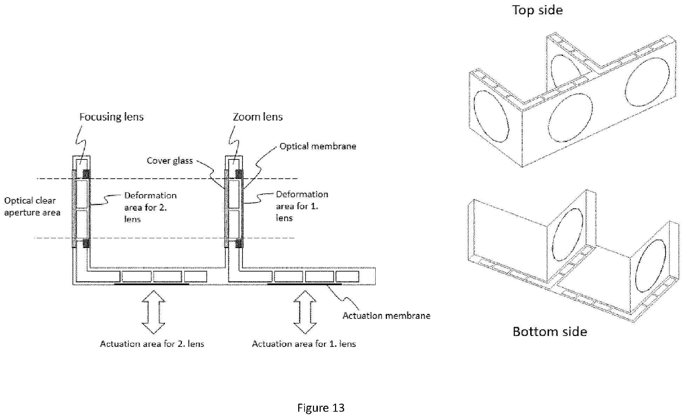

Figure 13 is a schematic representation of an optically tuneable lens assembly according to an example. In the example of figure 13 two separated liquid lens systems are arranged at right angles to respective actuation sections, as shown. Thus, two separated and angled systems are arranged in parallel, side-by-side, on a shared extruded housing. Both optical membranes can be operated via separated actuation membranes.

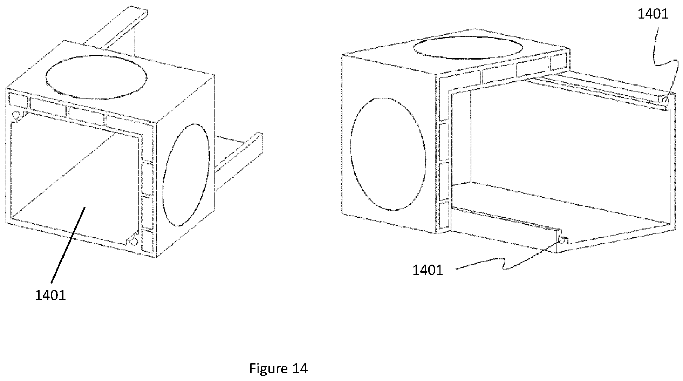

Figure 14 is a schematic representation of an optically tuneable lens assembly according to an example. In the example of figure 14, integrated guide tracks/rails 1401 can be provided as part of an assembly. Such tracks can be utilized as linear guides for other optical members in a camera system for example, and can be used to implement, e.g., focus and zoom functions.

Although examples described above with reference to figures 1 to 14 have been described on the basis of an extrusion in which ribs are provided in a transverse direction across a base section, it will be appreciated that, by virtue of the process of extrusion, such ribs may also be provided such that they extend parallel to the long axis of a base section.

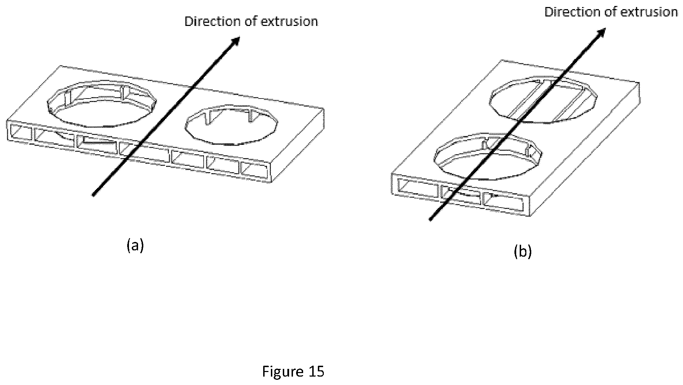

Figures 15a and 15b are schematic representations of optically tuneable lens assemblies according to examples. In figure 15a, ribs are provided in a transverse direction across a base section. In figure 15b, ribs are provided such that they extend parallel to the long axis of a base section. In both cases, a direction of extrusion of a support structure is depicted.

According to an example, micro channel extrusion can be used. Such extrusion can attain high accuracy dimensions with tolerances within, e.g., +/-0.05 mm and with sub 0.2 mm material thicknesses. Instead of metal extrusion, other similar forming techniques can be used, such as, e.g., impact extrusion or casting.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

## Claims

1. A method of manufacturing an optically tuneable lens assembly, the method comprising:
extruding (101) a support structure comprising a monolithic body section (201) defined by a first wall (203) and a second wall (205) separated from the first wall (203) by multiple supporting ribs (207), the body section (201) comprising a pair of opposing outer side wall sections disposed between the first wall (203) and the second wall (205) at respective outer edges thereof;
forming (103) a first opening (301) in the body section (201), the first opening (301) extending through the body section (201);
forming (105) a second opening (303) in the body section (201), the second opening (303) extending through the first wall (203) or the second wall (205) and respective portions of a first set of supporting ribs (207) disposed between the first wall (203) and a second wall (205) at a position of the second opening (303);
disposing (107) a flexible optical membrane over, on or within the first opening (301) at the first wall (203);
disposing (109) an optical cover plate over, on or within the first opening (301) at the second wall (205);
disposing (111) a flexible actuator membrane over, on or within the second opening (303); and
sealing (113) the body section (201) at a first edge and a second edge thereof, the first edge and the second edge extending laterally across the body section (201) between the first and second walls and the opposing outer wall sections.

2. The method as claimed in claim 1, further comprising:
depositing an optical fluid in a cavity defined by body section (201).

3. The method as claimed in claim 1 or 2, further comprising:
enlarging a portion of the first opening (301) at the first and/or second walls to reveal respective portions of a second set of supporting ribs (207) disposed between the first wall (203) and a second wall (205) at a position of the first opening (301).

4. The method as claimed in claim 3, further comprising:
supporting the flexible optical membrane and/or the optical cover plate on the revealed portions of the second set of supporting ribs (207).

5. The method as claimed in of claims 1 to 4, further comprising:
enlarging a portion of the second opening (303) to reveal respective portions of the first set of supporting ribs (207) disposed between the first wall (203) and a second wall (205) at the position of the second opening (303).

6. The method as claimed in claim 5, further comprising:
supporting the flexible actuator membrane on the revealed portions of the first set of supporting ribs (207).

7. The method as claimed in any preceding claim, further comprising:
providing a support member on at least one of the flexible optical membrane, the optical cover plate and the flexible actuator membrane.

8. The method as claimed in any preceding claim, further comprising:
forming a third opening in the body section (201), the third opening extending through the first wall (203) or the second wall (205) and respective portions of a third set of supporting ribs (207) disposed between the first wall (203) and a second wall (205) at a position of the third opening.

9. A tuneable optical lens structure, comprising:
an extruded support structure comprising a monolithic body section (201) defined by a first wall (203) and a second wall (205) separated from the first wall (203) by multiple supporting ribs (207), the body section (201) comprising a pair of opposing outer side wall sections disposed between the first wall (203) and the second wall (205) at respective outer edges thereof;
a first opening (301) in the body section (201), the first opening (301) extending through the body section (201);
a second opening (303) in the body section (201), the second opening (303) extending through the first wall (203) or the second wall (205) and respective portions of a first set of supporting ribs (207) disposed between the first wall (203) and a second wall (205) at a position of the second opening (303);
a flexible optical membrane over, on or within the first opening (301) at the first wall (203);
an optical cover plate over, on or within the first opening (301) at the second wall (205);
a flexible actuator membrane over, on or within the second opening (303); and
sealing members to seal the body section (201) at a first edge and a second edge thereof, the first edge and the second edge extending laterally across the body section (201) between the first and second walls and the opposing outer wall sections.

10. The tuneable optical lens structure as claimed in claim 9, wherein the monolithic body section (201) defines a first profile in which the first opening (301) and the second opening (303) are arranged parallel to one another.

11. The tuneable optical lens structure as claimed in claim 9, wherein the monolithic body section (201) comprises a first arm and a second arm, wherein the first opening (301) is provided on the first arm and the second opening (303) is provided on the second arm.

12. The tuneable optical lens structure as claimed in claim 9, wherein the first arm is perpendicular to the second arm.

13. The tuneable optical lens structure as claimed in claim 9, wherein the first arm is disposed at an angle to the second arm, the angle comprising one of an acute, obtuse and reflex angle.

14. The tuneable optical lens structure as claimed in claim 9, wherein the first arm is parallel to the second arm, and wherein the tuneable optical lens structure further comprises a body section portion joining the first arm and the second arm.

15. The tuneable optical lens structure as claimed in claim 14, wherein the body section portion defines an angular profile such that the first arm and the second arm are provided in spaced relation to one another.

## Patentansprüche

1. Verfahren zum Herstellen einer optisch abstimmbaren Linsenbaugruppe, wobei das Verfahren Folgendes umfasst:
Extrudieren (101) einer Stützstruktur, die einen monolithischen Körperabschnitt (201) umfasst, der durch eine erste Wand (203) und eine zweite Wand (205) definiert ist, die durch mehrere Stützrippen (207) von der ersten Wand (203) getrennt ist, wobei der Körperabschnitt (201) ein Paar gegenüberliegender äußerer Seitenwandabschnitte umfasst, die zwischen der ersten Wand (203) und der zweiten Wand (205) an deren jeweiligen Außenkanten angeordnet sind;
Bilden (103) einer ersten Öffnung (301) in dem Körperabschnitt (201), wobei sich die erste Öffnung (301) durch den Körperabschnitt (201) erstreckt;
Bilden (105) einer zweiten Öffnung (303) in dem Körperabschnitt (201), wobei sich die zweite Öffnung (303) durch die erste Wand (203) oder die zweite Wand (205) erstreckt und jeweilige Bereiche eines ersten Satzes von Stützrippen (207) zwischen der ersten Wand (203) und einer zweiten Wand (205) an einer Position der zweiten Öffnung (303) angeordnet sind;
Anordnen (107) einer flexiblen optischen Membran über, auf oder in der ersten Öffnung (301) an der ersten Wand (203);
Anordnen (109) einer optischen Abdeckplatte über, auf oder in der ersten Öffnung (301) an der zweiten Wand (205);
Anordnen (111) einer flexiblen Aktormembran über, auf oder in der zweiten Öffnung (303); und
Abdichten (113) des Körperabschnitts (201) an einer ersten Kante und einer zweiten Kante davon, wobei sich die erste Kante und die zweite Kante seitlich entlang des Körperabschnitts (201) zwischen der ersten und der zweiten Wand und den gegenüberliegenden Außenwandabschnitten erstrecken.

2. Verfahren nach Anspruch 1, ferner umfassend:
Ablagern einer optischen Flüssigkeit in einem Hohlraum, der durch den Körperabschnitt (201) definiert ist.

3. Verfahren nach Anspruch 1 oder 2, ferner umfassend:
Vergrößern eines Bereichs der ersten Öffnung (301) an der ersten und/oder der zweiten Wand, um jeweilige Bereiche eines zweiten Satzes von Stützrippen (207) freizulegen, die zwischen der ersten Wand (203) und einer zweiten Wand (205) an einer Position der ersten Öffnung (301) angeordnet sind.

4. Verfahren nach Anspruch 3, ferner umfassend:
Stützen der flexiblen optischen Membran und/oder der optischen Abdeckplatte auf den freiliegenden Bereichen des zweiten Satzes von Stützrippen (207).

5. Verfahren nach einem der Ansprüche 1 bis 4, ferner umfassend: Vergrößern eines Bereichs der zweiten Öffnung (303), um jeweilige Bereiche des ersten Satzes von Stützrippen (207) freizulegen, die zwischen der ersten Wand (203) und einer zweiten Wand (205) an der Position der zweiten Öffnung (303) angeordnet sind.

6. Verfahren nach Anspruch 5, ferner umfassend:
Stützen der flexiblen Aktormembran auf den freigelegten Bereichen des ersten Satzes von Stützrippen (207).

7. Verfahren nach einem der vorstehenden Ansprüche, ferner umfassend:
Bereitstellen eines Stützelements auf mindestens einem von der flexiblen optischen Membran, der optischen Abdeckplatte und der flexiblen Aktormembran.

8. Verfahren nach einem der vorstehenden Ansprüche, ferner umfassend:
Bilden einer dritten Öffnung in dem Körperabschnitt (201), wobei sich die dritte Öffnung durch die erste Wand (203) oder die zweite Wand (205) erstreckt und jeweilige Bereiche eines ersten Satzes von Stützrippen (207) zwischen der ersten Wand (203) und einer zweiten Wand (205) an einer Position der dritten Öffnung angeordnet sind.

9. Abstimmbare optische Linsenstruktur, umfassend:
eine extrudierte Stützstruktur, die einen monolithischen Körperabschnitt (201) umfasst, der durch eine erste Wand (203) und eine zweite Wand (205) definiert ist, die durch mehrere Stützrippen (207) von der ersten Wand (203) getrennt ist, wobei der Körperabschnitt (201) ein Paar gegenüberliegender äußerer Seitenwandabschnitte umfasst, die zwischen der ersten Wand (203) und der zweiten Wand (205) an deren jeweiligen Außenkanten angeordnet sind;
eine erste Öffnung (301) in dem Körperabschnitt (201), wobei sich die erste Öffnung (301) durch den Körperabschnitt (201) erstreckt;
eine zweite Öffnung (303) in dem Körperabschnitt (201), wobei sich die zweite Öffnung (303) durch die erste Wand (203) oder die zweite Wand (205) erstreckt und jeweilige Bereiche eines ersten Satzes von Stützrippen (207) zwischen der ersten Wand (203) und einer zweiten Wand (205) an einer Position der zweiten Öffnung (303) angeordnet sind;
eine flexible optische Membran über, auf oder in der ersten Öffnung (301) an der ersten Wand (203);
eine optische Abdeckplatte über, auf oder in der ersten Öffnung (301) an der zweiten Wand (205);
eine flexible Aktormembran über, auf oder in der zweiten Öffnung (303); und
Abdichtungselemente, um den Körperabschnitt (201) an einer ersten Kante und einer zweiten Kante davon abzudichten, wobei sich die erste Kante und die zweite Kante seitlich entlang des Körperabschnitts (201) zwischen der ersten und der zweiten Wand und den gegenüberliegenden Außenwandabschnitten erstrecken.

10. Abstimmbare optische Linsenstruktur nach Anspruch 9, wobei der monolithische Körperabschnitt (201) ein erstes Profil definiert, in dem die erste Öffnung (301) und die zweite Öffnung (303) parallel zueinander angeordnet sind.

11. Abstimmbare optische Linsenstruktur nach Anspruch 9, wobei der monolithische Körperabschnitt (201) einen ersten Arm und einen zweiten Arm umfasst, wobei die erste Öffnung (301) an dem ersten Arm und die zweite Öffnung (303) an dem zweiten Arm bereitgestellt ist.

12. Abstimmbare optische Linsenstruktur nach Anspruch 9, wobei der erste Arm senkrecht zu dem zweiten Arm steht.

13. Abstimmbare optische Linsenstruktur nach Anspruch 9, wobei der erste Arm in einem Winkel zu dem zweiten Arm angeordnet ist, wobei der Winkel einen von einem spitzen, stumpfen oder überstumpfen Winkel umfasst.

14. Abstimmbare optische Linsenstruktur nach Anspruch 9, wobei der erste Arm parallel zu dem zweiten Arm ist und wobei die abstimmbare optische Linsenstruktur ferner einen Körperabschnittsbereich umfasst, der den ersten Arm und den zweiten Arm verbindet.

15. Abstimmbare optische Linsenstruktur nach Anspruch 14, wobei der Körperabschnittsbereich ein Winkelprofil definiert, sodass der erste Arm und der zweite Arm in einer beabstandeten Beziehung zueinander bereitgestellt sind.

## Revendications

1. Un procédé de fabrication d'un ensemble de lentilles optiquement réglables, le procédé comprenant :
l'extrusion (101) d'une structure de support comprenant une section de corps monolithique (201) définie par une première paroi (203) et une seconde paroi (205) séparées de la première paroi (203) par plusieurs nervures de soutien (207), la section de corps (201) comprenant une paire de sections latérales extérieures opposées, disposées entre la première paroi (203) et la seconde paroi (205), aux bords extérieurs respectifs de celles-ci ;
la formation (103) d'une première ouverture (301) dans la section de corps (201), la première ouverture (301) se prolongeant à travers la section de corps (201) ;
la formation (105) d'une deuxième ouverture (303) dans la section de corps (201), la deuxième ouverture (303) se prolongeant à travers la première paroi (203) ou la seconde paroi (205) et des portions respectives d'un premier ensemble de nervures de soutien (207) disposées entre la première paroi (203) et la seconde paroi (205) à l'emplacement de la deuxième ouverture (303) ;
la disposition (107) d'une membrane optique flexible sur, dans ou à l'intérieur de la première ouverture (301) au niveau de la première paroi (203) ;
la disposition (109) d'une plaque de couverture optique sur, dans ou à l'intérieur de la première ouverture (301) au niveau de la seconde paroi (205) ;
la disposition (111) d'une membrane d'actionneur flexible sur, dans ou à l'intérieur de la deuxième ouverture (303) ; et
le scellement (113) de la section de corps (201) au niveau d'un premier bord et d'un second bord de celle-ci, le premier bord et le second bord se prolongeant latéralement à travers la section de corps (201) entre la première et la seconde paroi et les sections latérales extérieures opposées des parois.

2. Le procédé selon la revendication 1, comprenant également :
le dépôt d'un fluide optique dans une cavité définie par la section de corps (201).

3. Le procédé selon la revendication 1 ou 2, comprenant également :
l'élargissement d'une portion de la première ouverture (301) au niveau de la première et/ou de la seconde paroi pour révéler des portions respectives d'un deuxième ensemble de nervures de soutien (207) disposées entre la première paroi (203) et la seconde paroi (205) à l'emplacement de la première ouverture (301).

4. Le procédé selon la revendication 3, comprenant également :
le support de la membrane optique flexible et/ou de la plaque de couverture optique sur les portions révélées du deuxième ensemble de nervures de soutien (207).

5. Le procédé selon les revendications 1 à 4, comprenant également :
l'élargissement d'une portion de la deuxième ouverture (303) pour révéler des portions respectives du premier ensemble de nervures de soutien (207) disposées entre la première paroi (203) et la seconde paroi (205) à l'emplacement de la deuxième ouverture (303).

6. Le procédé selon la revendication 5, comprenant également :
le support de la membrane d'actionneur flexible sur les portions révélées du premier ensemble de nervures de soutien (207).

7. Le procédé selon toute revendication précédente, comprenant également :
la fourniture d'un élément de support sur au moins l'une des membranes optique flexible, plaque de couverture optique et membrane d'actionneur flexible.

8. Le procédé selon toute revendication précédente, comprenant également :
la formation d'une troisième ouverture dans la section de corps (201), la troisième ouverture se prolongeant à travers la première paroi (203) ou la seconde paroi (205) et des portions respectives d'un troisième ensemble de nervures de soutien (207) disposées entre la première paroi (203) et la seconde paroi (205) à l'emplacement de la troisième ouverture.

9. Une structure de lentilles optiques réglables, comprenant :
une structure de support extrudée comprenant une section de corps monolithique (201) définie par une première paroi (203) et une seconde paroi (205) séparées de la première paroi (203) par plusieurs nervures de soutien (207), la section de corps (201) comprenant une paire de sections latérales extérieures opposées disposées entre la première paroi (203) et la seconde paroi (205) aux bords extérieurs respectifs de celles-ci ;
une première ouverture (301) dans la section de corps (201), la première ouverture (301) se prolongeant à travers la section de corps (201) ;
une deuxième ouverture (303) dans la section de corps (201), la deuxième ouverture (303) se prolongeant à travers la première paroi (203) ou la seconde paroi (205) et des portions respectives d'un premier ensemble de nervures de soutien (207) disposées entre la première paroi (203) et la seconde paroi (205) à l'emplacement de la deuxième ouverture (303) ;
une membrane optique flexible sur, dans ou à l'intérieur de la première ouverture (301) au niveau de la première paroi (203) ;
une plaque de couverture optique sur, dans ou à l'intérieur de la première ouverture (301) au niveau de la seconde paroi (205) ;
une membrane d'actionneur flexible sur, dans ou à l'intérieur de la deuxième ouverture (303) ; et
des éléments de scellement pour sceller la section de corps (201) au niveau d'un premier bord et d'un second bord de celle-ci, le premier bord et le second bord se prolongeant latéralement à travers la section de corps (201) entre la première et la seconde paroi et les sections latérales extérieures opposées des parois.

10. La structure de lentilles optiques réglables conformément à la revendication 9, selon laquelle la section de corps monolithique (201) définit un premier profil dans lequel la première ouverture (301) et la deuxième ouverture (303) sont agencées parallèlement l'une à l'autre.

11. La structure de lentilles optiques réglables conformément à la revendication 9, selon laquelle la section de corps monolithique (201) comprend un premier bras et un second bras, le premier bras comportant la première ouverture (301) et le second bras comportant la deuxième ouverture (303).

12. La structure de lentilles optiques réglables conformément à la revendication 9, selon laquelle le premier bras est perpendiculaire au second bras.

13. La structure de lentilles optiques réglables conformément à la revendication 9, selon laquelle le premier bras est disposé à un angle par rapport au second bras, l'angle étant un angle aigu, obtus ou réfléchi.

14. La structure de lentilles optiques réglables conformément à la revendication 9, selon laquelle le premier bras est parallèle au second bras, et selon laquelle la structure de lentilles optiques réglables comprend également une portion de la section de corps joignant le premier bras et le second bras.

15. La structure de lentilles optiques réglables conformément à la revendication 14, selon laquelle la portion de la section de corps définit un profil angulaire de sorte que le premier bras et le second bras soient agencés de manière espacée l'un de l'autre.
